(19) Europäisches Patentamt
European Patent Office
Office européen des brevets

(11) EP 4 098 726 B1

(12) **EUROPEAN PATENT SPECIFICATION**

(45) Date of publication and mention of the grant of the patent:
**11.12.2024 Bulletin 2024/50**

(21) Application number: **21305732.6**

(22) Date of filing: **01.06.2021**

(51) International Patent Classification (IPC):
***C10M 173/00*** *(2006.01)* ***C10M 129/08*** *(2006.01)*
***C09K 8/00*** *(2006.01)* ***C10M 129/44*** *(2006.01)*
***C10M 169/04*** *(2006.01)* ***C10M 145/40*** *(2006.01)*
***C09K 8/54*** *(2006.01)* ***C23F 11/12*** *(2006.01)*
*C10N 30/04 (2006.01)* *C10N 30/12 (2006.01)*
*C10N 30/16 (2006.01)* *C10N 40/20 (2006.01)*
*C10N 40/22 (2006.01)* *C10N 40/24 (2006.01)*
*C10N 50/00 (2006.01)*

(52) Cooperative Patent Classification (CPC):
**C10M 173/00; C09K 8/54; C10M 145/40; C10M 169/042; C23F 11/12;** C09K 2208/32; C09K 2208/34; C10M 2201/062; C10M 2203/10; C10M 2207/022; C10M 2207/046; C10M 2207/128; C10M 2209/12; C10N 2030/04; C10N 2030/12;

(Cont.)

(54) **USE OF A MIXTURE OF AMPHIPATIC BIOSURFACTANTS AS AN ALKALINE CORROSION INHIBITOR**

VERWENDUNG VON EINER MICHUNG AUS AMPHIPATISCHEN BIOTENSIDEN ALS ALKALISCHER KORROSIONSINHIBITOR

UTILISATION D’UN MÉLANGE DE BIOSURFACTANTS AMPHIPATHIQUES COMME INHIBITEUR DE CORROSION ALCALINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.12.2022 Bulletin 2022/49**

(73) Proprietor: **Cipelia**
**80000 Amiens (FR)**

(72) Inventors:
- **PETIT, Mikaël**
  **69640 DENICE (FR)**
- **FINKE, Alexandre**
  **69300 CALUIRE (FR)**
- **GOYON, Valentine**
  **69003 LYON (FR)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**EP-A1- 3 290 500** **WO-A1-2019/094615**
**US-A1- 2016 201 000** **US-A1- 2016 237 334**
**US-A1- 2017 009 175**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C10N 2030/16; C10N 2040/20; C10N 2040/22;
C10N 2040/24; C10N 2040/245; C10N 2040/246;
C10N 2050/011

## Description

### Technical field of the invention

The present invention concerns an aqueous alkaline composition as defined in and by the appended claims, and its use in industrial processing fluids.

The present invention can be used in a wide variety of applications including, but not limited to, metalworking fluids, metal forming fluids, forging fluids and mining fluids so as to protect the metals with which these products are intended to come into contact during operations such as cutting, sawing, grinding, boring, drilling, turning, forming, stamping and pressing.

In the description below, references in square brackets ([ ]) refer to the list of references at the end of the text.

### State of the art

Corrosion can be defined as a destructive chemical or electrochemical phenomenon that can attack any metal or alloy by reaction with the surrounding environment and, in extreme cases, cause structural failure. Corrosion can also be defined as the deterioration of a material by reaction to its environment. Among the different corrosion mechanisms, microbiologically induced corrosion or biologically influenced corrosion (bio-corrosion) by the activity of microorganisms is the most common and highly destructive. Corrosion problems affect many industrial sectors, such as construction, drinking water systems, shipping, oil and lubricants.

Metal working conditions promote corrosion of metal surfaces. This is particularly relevant for ferrous metal, but not limited to, for example, copper or aluminum can suffer severe corrosion damage when working metals without adequate corrosion protection. Therefore, processing fluids typically contain corrosion inhibitors to protect metal surfaces from corrosion.

The increasing cost and disposal problems of non-aqueous-based processing fluid compositions have accelerated the demand for water-miscible or aqueous-based processing fluid compositions. Aqueous-based processing have gained importance over non-aqueous processing fluids due to their economic, environmental and safety benefits. Aqueous-based processing fluids are used in chip-forming and non-forming metalworking processes well known in the art such as drilling, tapping, broaching, grinding, rolling, drawing, spinning, milling, bending, turning and stamping.

Water-miscible processing (also known as metalworking fluids) for machining ferrous and non-ferrous metals can be mix with water to form transparent, translucent, semi-translucent or milky emulsions. Water-miscible processing fluids can be used in aqueous-based lubricants such as, but not limited to, soluble oils containing greater than 50% by weight of mineral oil and which form emulsions with a particle size greater than 1 $\mu$m when diluted with water; semi-synthetic lubricants with a typical emulsion particle size of 0.5 to 1 $\mu$m and which contain less than 50% by weight of mineral oil; microemulsions (*i.e.* emulsions with a particle size of less than 0.5 $\mu$m) which contain less than 20% by weight of mineral oil and which exist as microscopic droplets in water; neo-synthetic lubricants without mineral oil, but which may contain up to 30% by weight or more of vegetable oils, animal oils, animal fats, natural esters, synthetic esters, polyglycols and/or synthetic polyolefins that carry water-insoluble materials as microscopic droplets in water; and true solution synthetic oils where all additives are soluble in water. Water-miscible processing fluids are suitable for use as a lubricating agent in the machining and forming of metals such as, but not limited to, steel, aluminum, copper, titanium and their alloys.

Water tends to corrode some ferrous and non-ferrous parts, especially aluminum, under typical working conditions, especially if the fluid has a relatively high pH, *e.g.* above 9; this is typical of many aqueous processing fluids. It is therefore common to introduce a corrosion inhibitor into industrial processing fluids.

The water-miscible processing fluids do not, or only minimally, corrode, stain or discolor these metals. The water-miscible processing fluids provide corrosion inhibiting properties and buffer other aqueous industrial fluids. In addition, where residual amounts remain on the surfaces of worked or formed metals, the residues do not interfere with additional processes such as heat treatment, welding, coating and/or painting.

In addition, the water-miscible metalworking fluids contain mineral oil and often contain lubricity additives, such as natural fatty oils, synthetic esters or fatty acids of natural origin, *e.g.* those that are biodegradable. Like many metals and alloys, such as stainless steels, nickel- and aluminum-based alloys, water-miscible metalworking fluids containing mineral or biodegradable oil usually contain emulsifying additives that are susceptible to microbial degradation or are easily degraded by microorganisms. They may have a short shelf life because the emulsified phase containing the mineral oil tends to separate.

These emulsions are therefore usually treated with antimicrobial additives (biocides) as metalworking fluids are generally used in open systems and exposed to bacteria and other microorganisms. Some fast-growing bacteria have been known to affect the performance of the fluids during use or during prolonged storage. The use of antimicrobials in water-miscible processing fluids to reduce the deterioration of fluid performance, caused by microbial action on fluid

components over time, is known to occur in certain circumstances. However, many antimicrobial substances can be potentially harmful to humans and the environment.

Water-miscible processing fluids are usually complex mixtures of oils, detergents, surfactants, biocides, lubricants, and potentially harmful corrosion inhibitors.

For example, commercial processing fluids may incorporate corrosion inhibitors such as boric acid, alkali borates and borate esters in combination with alkanolamines to maintain alkaline pH values, and to neutralize acid functional components.

Amine borates are known to provide very good corrosion inhibition and, in addition, biocidal activity. Such activity is in principle desirable because metalworking fluids contain water and oil and are therefore subject to biological growth. Microbiological contamination in a metalworking fluid has a detrimental effect on the life of the fluid, as it degrades certain components of the fluid, such as petroleum and sodium sulfonates. The use of amine borate corrosion inhibitors therefore reduces the biocide requirements for the metalworking fluid. However, amine borates are known to have a negative impact on the environment, cause health risks and are generally undesirable in industrial applications.

But at present, there are no readily available alternatives that can be used in place of amine borate derivatives to match all the attributes required in an water-miscible metalworking fluid, and at the same time meet changing environmental and health safety requirements.

For example, triazine derivatives have been reported as efficient corrosion organic inhibitors due to the presence of three nitrogen atoms symmetrically arranged in a six-membered ring. And triazine was a common metalworking biocide to control bacterial growth with good effectiveness. But triazine has been linked to hypersensitivity pneumonitis in coolant users and has also come under greater scrutiny by environmental protection agencies as a formaldehyde condensate. As a result, it continues to be eliminated from metalworking fluid use. Other formalin and formaldehyde biocides present serious health concerns due to their carcinogenicity and high volatility. The high working temperatures encountered in some metalworking processes can lead to substantial volatilization of formalin or formaldehyde or degradation of formalin precursors, requiring routine reintroduction of these compounds into the working fluid. Furthermore, in open systems, and particularly in systems that generate aerosols, such as metal working environments, worker exposure to these substances is a problem.

The elimination of these compounds from metalworking fluids has led to the use of other, relatively less effective or less stable alternative biocides. However, frequently, an additional biocide must be added during use to maintain low bacterial growth in large and small central system tanks. This use of in-tank biocides can present inventory and operator health and safety problems.

Attempts have also been made to control certain bacteria by using compounds that interfere with the metabolism of the bacteria itself. Unfortunately, these substances can also be generally harmful to people. Examples of such compounds include chlorinated phenols, isothiazolinones, and several primary, secondary and tertiary alkanolamines also acting as corrosion inhibitors among which dicyclohexylamine, have had commercial application. However, while having some effectiveness in certain circumstances, their use in metalworking operations and fluid environments is hampered by drawbacks in the areas of worker safety, wastewater management or stability. For example, chlorinated phenols are highly regulated in waste streams. For example, isothiazolinones are expensive skin sensitizers and are not stable in alkaline environments. Amino compounds remain toxic to humans and in some cases fatal by inhalation and toxic to aquatic organisms. In addition, the corrosion inhibition provided by these amine substitutes does not generally compare with the performance shown by conventional amine borates. For example, dicyclohexylamine is toxic by ingestion and absorption and corrosive to the respiratory system. In addition, dicyclohexylamine faces declining acceptance because it is a secondary amine which, in the presence of nitrites, forms carcinogenic nitrosamines that can be formed during storage of metalworking fluid for long periods of time. In general, secondary amines are therefore not desirable for the purpose of eliminating or slowing the growth of bacteria in metalworking fluids. In addition, certain primary or tertiary amines are used to provide a reserve of alkalinity at relatively high concentrations, which leads to the promotion of the degradation mechanism of metals, particularly aluminum staining. Examples of aliphatic primary amines for substituting dicyclohexylamine in an aqueous alkaline metal working environment described in Patent Application US20180291306 [1] are effective in inhibiting the complex mechanism of bio-corrosion. Nevertheless, aliphatic primary amines cause skin irritation, serious eye irritation and can be very toxic to aquatic organisms.

Examples of phosphate esters or amine salts of acid phosphates or phosphoric acids in substitution of borate amines are described in Patent Application US20170009175 [2]. However, phosphate esters are subject to relatively rapid bacterial degradation. Indeed, the organic corrosion inhibitor often has an additional buffering effect, but due to its heteroatomic structure, most organic phosphorus compounds have been shown to cause severe microbial growth which ultimately degrades the performance of the fluid, although they may have superior stain or lubrication performance, especially on aluminum alloys. And the amine salts of these phosphates precipitate in the presence of hard water containing calcium ions.

Examples of silicates and their derivatives to prevent corrosion or staining of metals are described by Leimenstoll et al ("Are performance additives necessary for aluminum machining?", 17th International Colloquium Tribology, 2010)

[3]. However, silicates tend to clog ultrafiltration membranes frequently used in fluid recycling.

Examples of amino acids which may be a proteinogenic (alpha) amino acid such as glycine, lysine, cysteine or aspartic acid for processing environmentally friendly fluids without boron or secondary amine are also described in Patent Application US2014014453 [4]. Amino acids among other organic molecules containing heteroatoms such as boron, nitrogen, sulphur, phosphorus and oxygen show significant corrosion inhibition efficiency. However, both nitrogen and sulphur are the main sources of energy for a majority of aerobic and anaerobic bacteria, producing black residues and/or acidic wastes which can themselves be corrosive to metals.

Due to limitations in the use of chemical biocides and because of processing fluids are currently being examined with increased scrutiny because of hazards associated with worker exposure, including, but not limited to, skin rashes, possible increased cancer rates, respiratory problems and other issues, there is an urgent need to find new products with appropriate properties such as corrosion inhibiting, effective antimicrobial activity, economic feasibility, low toxicity and environmentally friendly characteristics. Research has thus recently focused on environmentally friendly organic corrosion inhibitors from natural sources.

Among these environmentally friendly compounds obtained by biosynthesis from renewable agricultural raw materials, glycolipids promote molecular adsorption to the anodic sites of a metal surface with formation of an insoluble monolayer barrier film.

As an example, the use of glycolipids (such as sophorolipids or mannosylerythritol lipids) as non-toxic and environmentally friendly corrosion inhibitors is described in Patent Applications US20150299556 and US20160237334 [5 and 6]. However, this use refers to the petroleum or lubricant industry in an acidic environment or in the presence of acidic decomposition products. Moreover, the real effectiveness of such a corrosion inhibitor is only valid in combination with an acid corrosion inhibitor intensifier such as potassium iodide.

In addition, examples of biosurfactants derived from *Bacillus* and *Pseudomonas* strains used as an environmentally friendly microbial inhibitor (biocide) to inhibit the biocorrosion process and protect materials against corrosion are also described by Plaza et al ("Biosurfactants: Eco-Fiendly and Innovative Biocides against Biocorrosion", Int. J. Mol. Sci., 21: 2152, 2020) [7].

The use of tri-acylated mannosylerythritol lipids as corrosion inhibitors is also described in International Application WO2018095975 [8]. However, the inhibition of the formation of rust by a tri-acylated mannosylerythritol lipid with the metal concerns exclusively a mixture with a mineral or synthetic oil, with a cleaning or degreasing solvent, for example a vegetable oil, a fatty acid ester, propylene glycol, white spirit, with a binder or any substance rich in chlorides, sulphides, carbon dioxide, organic acids or micro-organisms at the origin of the formation of these compounds, such as crude oil.

There is therefore still a need for cheap, non-toxic, environmentally friendly compounds with strong corrosion inhibiting properties in alkaline media.

## Description of the invention

The present invention is disclosed in and by the appended claims.

To meet this need, the Inventor has carried out new water-miscible or aqueous-based alkaline compositions essentially comprising at least one non-water soluble lubricant, at least one alkalinity agent, and at least one specific renewable and biodegradable compound (*i.e.* glycolipid biosurfactant: chemical significantly reducing at low concentrations the surface and interfacial tension of water and forming stable emulsions, which is obtained from a natural source (plant, animal or microbial cell), for example, by fermentation. This process was described by Gorin et al. (Canadian Journal of Chemistry, 39: 846, 1961) [9] or by Shete et al. (Journal of Scientific and Industrial Research, 65: 91, 2006) [10]) providing corrosion inhibition (*i.e.* prevention or slowing down of a corrosion phenomenon) or preventing staining of ferrous metals such as steel alloys and non-ferrous metals such as aluminium alloys, biostability, hard water tolerance, low foam, formulation stabilization and/or lubricity. The particular compositions according to the invention as defined in the appended claims show remarkable metal surface protection capacities. They also provide a new solution for effectively reducing the toxicity and environmental impact of many water-miscible or aqueous-based metalworking fluids (or processing fluids) in which they are used, which generally have a pH of between 8 and 9.5. This pH range can be extended to between 7.0 and 10.5 for some specialized fluids. The alkaline environment of water-miscible or aqueous-based metalworking fluids is a necessary compromise to meet various conflicting characteristics such as protection against metal corrosion, alkalinity reserve, emulsion stability, control of dermatitis and bacterial growth, and compatibility with other materials (seals, elastomers). Due to this alkaline environment, the passive layer (natural formation of a protective and invisible oxide film on the metal surface) of some metals, such as aluminum and its alloys, can be altered by dissolution.

Glycolipid biosurfactants are considered environmentally friendly, sustainably produced, and safe alternatives to surfactants chemically manufactured from fossil raw materials. In addition to surfactant properties, glycolipid biosurfactants also have beneficial antimicrobial properties (International Application WO2012167920) [11], and in contact with oils and/or fats can spontaneously form microemulsions (International Application WO2015091250) [12]. Glycolipids can also destroy microbial cells by directly disrupting the integrity of the plasma membrane or the cell wall. The extent

of this cellular damage makes it difficult for any target organism to develop resistance to the biosurfactant. It has also been reported that among the glycolipid compounds, rhamnolipids or sophorolipids can effectively kill various bacteria, as well as fungi and some viruses.

The present invention thus concerns an aqueous alkaline composition having a pH from 8 to 12 comprising at least one rhamnolipid, at least one sophorolipid, at least one non-water soluble lubricant, and at least one alkalinity agent;

wherein said at least one alkalinity agent is chosen from the group consisting of hydroxides of alkali metals and of alkaline earth metals, alkanolamines, and aliphatic amines; and
wherein said composition contains:

- from 0.01 to 30 wt% of sophorolipids;
- from 0.01 to 30 wt% of rhamnolipids;
- from 1 to 80 wt% of non-water soluble lubricants;
- from 1 to 25 wt% of alkalinity agents.

Rhamnolipids can be obtained from bacteria of the genus Pseudomonas aeruginosa, Pseudomonas spp, Serratia rubidea, or Pseudomonas fluorescens, preferably when grown on hydrophobic substrates such as n-alkanes or vegetable oils. Rhamnolipids provide good detergency, wetting, stable microemulsion formation and solubility under high alkalinity. They are non-aggressive to the skin. The surfactant and emulsion properties of rhamnolipids include reducing the surface tension of water to less than 30 mN/m, a critical micellar concentration (CMC) of between 20 and 225 mg/L and decreasing the interfacial tension between oil and water to less than 1 dyne/cm which means that much less material is required to achieve surface tension/interfacial tension reductions. They are readily biodegradable with very low toxicity (having higher EC50 values). They are also not affected by temperature, pH and salinity. Furthermore, the positive influence of rhamnolipids on the repassivation process following mechanical damage (tribocorrosion) is known in acidic environments. Indeed, rhamnolipids effectively prevent the corrosion of a freshly generated surface of an aluminium alloy by additionally forming a low solubility complex with aluminium ions that can deposit on the local anodic sites of the alloy and modify the repassivated film compared to the normal film to give a thicker or more resistive layer (Ivan M. Zin et al., Corrosion inhibition of aluminium alloy by rhamnolipid biosurfactant derived from pseudomonas sp. PS-17, Anti-Corrosion Methods and Materials, 2018) [13].

Sophorolipids can be produced by fermentation using yeasts such as Candida bombicola (also known as Torulopsis bombicola), Yarrowia lipolytica, Candida apicola (Torulopsis apicola) and Candida bogoriensis, by growing them on sugars, hydrocarbons, vegetable oils or mixtures thereof. The sophorolipids may be used in protonated acid form, in acid form at least partly in the form of metal salts, in lactone form, in crude form (*i.e.* in the form of acids and/or acids at least partly in the form of metal salts, mixed with lactones). However, in the compositions according to the invention, the sophorolipids are preferably in crude form. Preferably, the sophorolipid is produced from stearic or oleic acid. As an example, the sophorolipid can be marketed by the company Wheatoleo under the trade name ECO S or by the company Ecover under the trade name SL18. The surfactant and emulsion properties of sophorolipids include the reduction of the surface tension of water to less than 35 mN/m, a critical micellar concentration (CMC) of between 35 and 140 mg/L and the reduction of the interfacial tension between oil and water to less than 7 mN/m.

According to a particular embodiment of the composition of the invention, the at least one rhamnolipid is chosen amongst the rhamnolipids of formula (I):

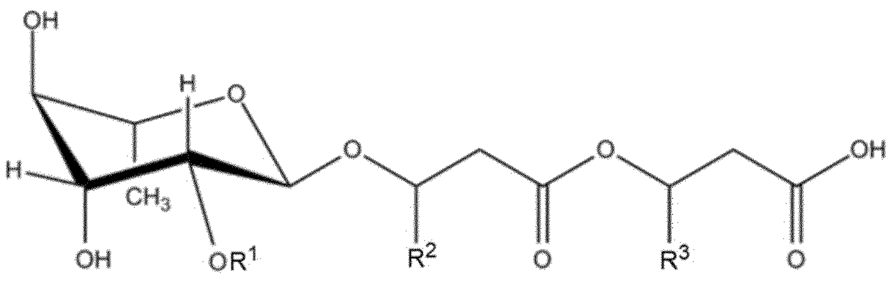

(I)

wherein

$R^1$ represents -H or a L-rhamnose moiety;
$R^2$ and $R^3$, independently represents a linear or branched, alkyl chain having from 5 to 9 carbon atoms. In particular, the at least one rhamnolipid is of formula (I) in which $R^2$ and $R^3$ are heptyl groups. Particularly, the at least one

rhamnolipid is the monorhamnolipid of formula (II), the dirhamnolipid of formula (III) or a mixture thereof:

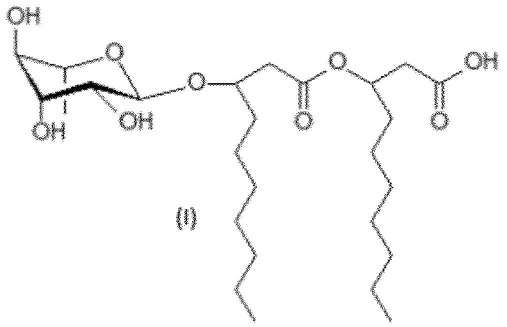

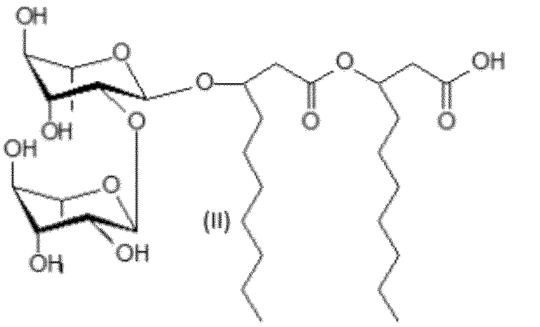

(II) (III)

Preferably, the rhamnolipid is a mixture of a mono-rhamnolipid of formula (II) and a di-rhamnolipid of formula (III) in a ratio of 3:2 by weight, having a radical R2 and R3 containing 7 carbon atoms purified to 90% from Pseudomonas aeruginosa. As an example, the rhamnolipid can be marketed by the company Agae under the trade reference R90.

According to a particular embodiment of the composition of the invention, the at least one sophorolipid is the sophorolipid of formula (IV), the sophorolipid of formula (V) or a mixture thereof:

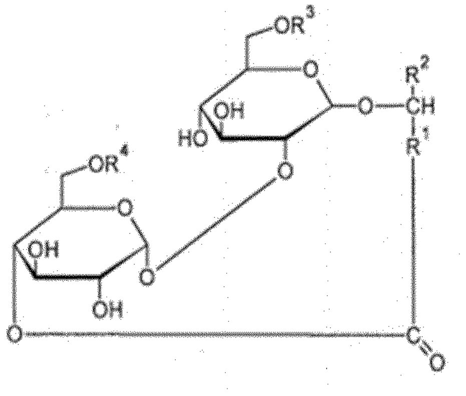

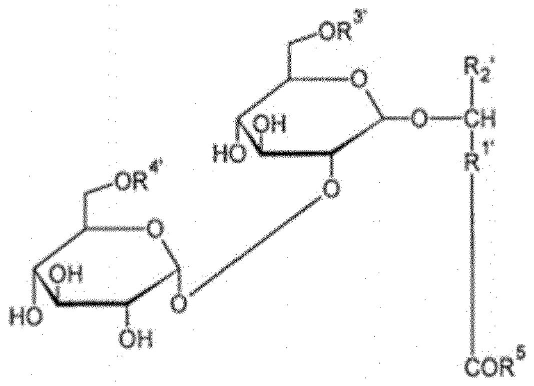

(IV) (V)

wherein

$R^1$ and $R^{1'}$, independently represent a hydroxylated or non-hydroxylated, linear or branched alkyl chain having from 1 to 21 carbon atoms;
$R^2$ and $R^{2'}$, independently represent H or a hydroxylated or non-hydroxylated, linear or branched alkyl chain having from 1 to 9 carbon atoms;
$R^3$, $R^4$, $R^{3'}$ and $R^{4'}$, independently represent H or a acetyl group; and
$R^5$ is an $-OCH_3$ or -OH group.

For example, the crude sophorolipid is a mixture of the lactone and acidic forms. The weight ratio between the lactone (IV) and acidic (V) forms is between 80:20 and 30:70. Preferably, the majority form in the mixture is a lactone (IV) form, C16 to C18, *i.e.* the hydrophobic part has 16 to 18 carbons and has undergone intramolecular esterification.

In particular, the at least one sophorolipid has the formula (IV) and (V) wherein $R^1$ and $R^{1'}$, independently represent hydroxylated or non-hydroxylated, linear or branched alkyl chains having from 16 to 18 carbon atoms.

According to a particular embodiment of the composition of the invention, the at least one non-water soluble lubricant includes petroleum-based oil, non-petroleum-based oil or a combination thereof. These lubricants are emulsifiable by means of emulsifiers that allow them to mix with water and form a transparent or milky white emulsion. For example, said lubricant is a hydrodynamic or boundary lubricant additive. Hydrodynamic lubricant additives are used to enhance friction reduction of the processing fluid (also known as metalworking fluid). Hydrodynamic lubricant additives

separate surfaces sliding over each other with a coherent lubricating film or liquid. The non-compressible nature of the film separates the surfaces to prevent metal to metal contact completely. Hydrodynamic lubricant additive may be various mineral oils, such as (but not limited to) API Group I (including hydrotreated heavy naphthenic and/or paraffinic distillate), API Group II (including paraffinic and/or isoparaffinic distillate) and/or a biobased hydrocarbon such as isoparaffinic hydrocarbon derived from hydrocarbon terpenes such as myricene, ocimene, farnesene. Boundary lubricant additives reduce friction and wear by forming films on the surfaces of tools and work pieces that they contact during metal working operations. The films are typically formed when the polarities of the additives associate with the charges of the metal surfaces. This film acts as a boundary to lubricate the tool and the work piece contact zone. Any film forming additive is suitable so long as it does not interfere with the stability, reusability, or corrosion inhibiting action of the water-miscible or aqueous-based alkaline composition. Examples of boundary lubricant additive(s) are, independently or a mixture of two or more of, fatty amides, fatty acids, polymerized fatty acids, animal fatty oils, vegetable fatty oils, fatty acid esters, partial esters, estolides, polymeric esters, EO/PO block copolymers, oleyl alcohol, or the like.

The alkalinity agent as above defined contributes to a higher stability of the emulsion. The alkalinity assists that e.g. anionic surfactants may become more stable. The alkalinity may contribute in the corrosion resistance and often in the bio-stability too. For example, the alkalinity agent comprises at least one alkaline water-soluble compound selected from the group consisting of hydroxides of alkali metals and of alkaline earth metals, for example potassium hydroxide, sodium hydroxide or any mixture of these. For example, the alkalinity agent comprises at least one alkanolamine selected from the group consisting of primary alkanolamines like amino-methyl propanol AMP, diglycolamine DGA, monoethanolamine MEA and monoisopropylamine MIPA, of tertiary alkanolamines like triethanolamine TEA, triisopropanolamine TIPA, methydiisopropanolamine MDIPAN, butyldiethanolamine BDEA, octyldiethanolamine ODEA and N,N-dibutylethanolamine DBEA. For example, the alkalinity agent comprises at least one aliphatic amine selected from the group consisting of primary alkyl amine like octylamine, nonylamine, decylamine, undecylamine, dodecylamine, tridecylamine, tetradecylamine, pentadecylamine, hexadecylamine, heptadecylamine, or octadecylamine. Alkyl amine, alkanolamine and/or hydroxide are used in such amounts that the acid compound is effectively neutralized. The molar ratio of alkalinity groups to carboxyl groups is typically about 1:1. A slightly lower ratio can be used to avoid high VOC, irritation of human skin coming in contact with such composition and to avoid strong smelling, but it is without significant beneficial effect on corrosion protection. An excess of alkalinity agent can be used, but the lubricity may be too low and the alkaline sensitive metallic materials may be chemically attacked and dissolved. It will be apparent to those skilled in the art that many other alkalinity agents could be used in alternative thereto.

The present invention also concerns a metalworking fluid comprising a composition of the present invention.

According to a particular embodiment, the metalworking fluid of the present invention can be in the form of a concentrate. « Concentrate » and similar terms refer to at least one sophorolipid, at least one rhamnolipid, at least one alkalinity agent, and at least one non-water soluble lubricant and/or additional conventional components of the metalworking fluid partially diluted with water. « Partially diluted » means that the concentrate requires further dilution, typically with water as a diluent, before it is ready for use as an aqueous metalworking fluid.

According to a particular embodiment of the present invention, the concentrate contains a concentration of 0.01 to 30% of sophorolipids and rhamnolipids by weight of the total composition and more particularly 1 to 15%. By "concentration" is meant the ratio of the amount of a substance to the total volume by weight of a composition containing said substance. Typically, the concentrate comprises at least about 1, typically at least about 5 and sometimes up to 10% or more by weight of said glycolipid biosurfactants.

According to a particular embodiment of the present invention, alternatively, or in addition, the concentrate may further contain less than about 95, more typically less than about 75, more typically less than about 50% by weight of water, e.g., less than about 30% by weight of water.

According to a particular embodiment of the present invention, the concentrate may further comprise any suitable amount of at least one non-water lubricant, for example, 0 wt% to 90 wt%, or 1 wt% to 80 wt% of an oil. The amount of the hydrodynamic lubricant additive(s), preferably a mineral oil with a viscosity grade from 10 cSt to 50 cSt, preferably 20 cSt to 40 cSt, may be about 0 to 60% by weight, more preferably about 5 to 45% by weight, even more preferably about 10 to 20% by weight. The amount of the boundary lubricant additive(s), preferably a fatty acid ester or an estolide, may be about 0 to 40% by weight, more preferably about 2 to 20% by weight, even more preferably about 3 to 15% by weight.

According to a particular embodiment of the present invention, the concentrate may further comprise any suitable amount of at least one alkalinity agent as defined above to maintain the pH of aqueous metalworking fluids at a near constant value. The amount of said alkalinity agent(s) may be about 1 to 25% by weight, more preferably about 2 to 15% by weight, even more preferably 3 to 10% by weight.

According to a particular embodiment of the present invention, a concentration of rhamnolipid, in an aqueous metalworking fluid having a pH greater than or equal to 8 (preferably a pH from 8 to 12), greater than or equal to 2000 ppm inhibits the corrosion or staining of ferrous metals.

According to a particular embodiment of the present invention, a concentration of sophorolipid, in an aqueous

metalworking fluid having a pH greater than or equal to 8 (preferably a pH from 8 to 12), greater than or equal to 4000 ppm inhibits the corrosion or staining of ferrous metals.

Advantageously according to a particular embodiment of the present invention, and surprisingly, a mixture of rhamnolipid in a concentration greater than or equal to 600 ppm, preferably greater than 1000 ppm, and of sophorolipid in a concentration greater than or equal to 200 ppm and preferably greater than 400 ppm, in an aqueous metalworking fluid having a pH greater than or equal to 8 (preferably a pH from 8 to 12), inhibits the corrosion or staining of ferrous metals.

According to a particular embodiment of the present invention, a concentration of sophorolipid, in an aqueousmetalworking fluid having a pH greater than or equal to 8 (preferably a pH from 8 to 12), less than or equal to 8000 ppm inhibits the corrosion or staining of non-ferrous metals and particularly aluminum alloys.

Advantageously according to a particular embodiment of the present invention, and surprisingly, a mixture of rhamnolipid in a concentration of less than 2000 ppm, preferably less than or equal to 1600 ppm, and of sophorolipid in a concentration of less than 3000 ppm, preferably less than or equal to 1300 ppm, in an aqueous metalworking fluid having a pH greater than or equal to 8 (preferably a pH from 8 to 12), inhibits the corrosion or staining of non-ferrous metals and particularly aluminum alloys.

Furthermore, in an aqueous metalworking fluid having a pH greater than or equal to 8 (preferably a pH from 8 to 12), a concentration of between 1500 and 6000 ppm of a mixture of rhamnolipid and sophorolipid in a weight ratio of between 90:10 and 10:90 inhibits corrosion or staining of ferrous and non-ferrous metals.

The metalworking fluid of the present invention may also comprise one or more additional conventional components well known in the art such as surfactants, emulsifiers, hydrotropes, couplers, solution stabilizers, metal deactivators, chelating agents, anti-foaming agents, eventually antimicrobial agents, etc., all of which are less harmful to the environment, and do not contain substances that have restrictions on their use (such as nitrite, formaldehyde, boron and their derivatives).

The metalworking fluid of the present invention may comprise one or more surfactants useful as emulsifiers and/or hydrotropes. Emulsifiers are surface active agents that promote the formation and stabilization of the metalworking fluid. As used herein, hydrotrope includes materials that solubilize hydrophobic compounds in aqueous solutions and/or act as coupling agents. Metalworking fluids can become unstable under varying process conditions. For example, water composition, water hardness, temperature, pH and other variables can vary over wide ranges during metal working processes. For example, after preparation of the metalworking fluid, the ionic strength and/or water hardness may increase significantly during operation due to evaporation of water or incoming metal fines and ions, resulting in a reduction or loss of relevant properties such as emulsion stability, film-forming properties and dispersing capacity. Such instability is undesirable with respect to the metalworking fluids. Thus, one or more emulsifiers and/or hydrotrope may be added to the metalworking fluid to maximize solubility of hydrophobic components in the concentrate and aqueous-based composition and emulsion stability under varying operating conditions. The emulsifier and/or hydrotrope may be any suitable ionic surfactant, nonionic surfactant, Gemini emulsifier, or amphoteric surfactant, individually and in the form of mixtures of different surfactants. The emulsifier and/or hydrotrope may be used in pure form or as a solution of one or more emulsifiers and/or hydrotropes in water or organic solvents. Examples of emulsifier(s) are, independently or a mixture of two or more of, alkoxylated natural fatty alcohol, alkoxylated ether carboxylate alcohol, sorbitan and sorbitan derivatives, alkoxylated fatty acid ester, succinic acid derivatives such as a hydrocarbyl succinimide, sodium or synthetic sulfonates, alkoxylated castor oil,alkoxylated fatty amine, fatty acid amides, nonionic ethoxylate or the like. The concentrate may comprise about 0 to 30% by weight, more preferably about 1 to 20% by weight, even more preferably about 5 to 15 by weight of emulsifier(s).

Examples of hydrotrope are, alone or a mixture of, an alkylated polyglycol ether and derivatives thereof. The concentrate may comprise about 0 to 10 wt%, more preferably about 1 to 8 wt%, even more preferably about 2 to 5 wt% of hydrotrope(s).

Defoamers or anti-foaming agents are additives used to reduce foaming in aqueous alkaline metalworking fluids that can interfere with metalworking processes. Foaming is undesirable in metalworking operations as it can reduce cooling at the workpiece-tool contact area and cause numerous problems with transport and containment control. Examples of anti-foaming agents are, alone or a mixture of, siloxane glycol copolymers, polyether-modified polysiloxanes, reaction products of silicon dioxide and organosiloxanes, organosiloxane polymers, hydrophobically treated silica or ethoxylated/propoxylated hydrocarbons, waxes or mixtures thereof. The amount of anti-foaming agent(s) in the concentrate may be about 0.05 to 2% by weight, more preferably about 0.1 to 0.5% by weight, even more preferably about 0.2 to 0.4% by weight.

Examples of suitable metal deactivators are, alone or a mixture of two or more, tolytriazole, benzotriazole and derivatives thereof. The amount of metal passivator(s) in the concentrate may be about 0.05 to 2% by weight, more preferably about 0.1 to 1% by weight, even more preferably about 0.2 to 0.6% by weight.

According to a particular embodiment of the present invention, the metalworking fluid may contain an antimicrobial agent such as sodium omadine, sodium pyrithione. The metalworking fluid may comprise about 0.05 to 2% by weight, preferably, more preferably about 0.1 to 0.5% by weight, even more preferably about 0.2 to 0.3% by weight of

antimicrobial agent(s).

According to a particular embodiment of the present invention, the film-forming additive(s), emulsifier(s), and other additive(s) may be present in any suitable amount provided that their use does not interfere with the desired corrosion inhibiting action.

According to a particular embodiment of the present invention, the metalworking fluid is free of boron, phosphorus, sulfur, secondary amine, triazine compounds and derivatives, nitromorpholine, bromonitrile.

The present invention also concerns the use of a composition or a metalworking fluid of the present invention as a corrosion inhibitor in an alkaline medium.

The present invention also concerns the use of a composition of the present invention for lubricating metals.

The present invention, thus generally described, will be understood more readily by reference to the following examples, which are provided by way of illustration and are not intended to be limiting of the present invention.

**Brief description of the figures**

Figure 1 represents a Tafel curve showing the anodic and cathodic reactions in an electrochemical cell.
Figure 2 represents the experimental set-up for measuring polarisation curves.
Figure 3 represents the results in terms of corrosion inhibition efficiency of tests 1 to 5 on (A) steel XC48 and (B) aluminum 6061.
Figure 4 represents the results in terms of corrosion inhibition efficiency of tests 6 to 11 on (A) steel XC48 and (B) aluminum 6061.
Figure 5 represents the ability of (A) concentrate without corrosion inhibitor (B) sophorolipid (3000 ppm) (C) rhamnolipid (3000 ppm) (D) rhamnolipid/sophorolipid (1:1) (E) Rewocoros AL200 / Becrosan 2184 (2:1) (F) commercial concentrate (pH 9.7), to inhibit aluminum staining in an aqueous metalworking fluid.

**EXAMPLES**

**EXAMPLE 1 : ELECTROCHEMICAL DETERMINATION OF THE ABILITY OF COMPOUNDS OF A COMPOSITION OF THE INVENTION AND OF COMPARATIVE COMPOUNDS TO INHIBIT CORROSION**

Material and Methods

The ability to inhibit corrosion of metals and in particular steel against rust formation and aluminium against staining was assessed in a similar way to that described in:

- The cast iron chip corrosion test according to IP125-2014
- Non-staining test of 600 grain polished aluminium (40°C x 24h)
- Electrochemical technique using polarisation curves

Polarisation methods were based on changing the current or potential on a test sample and recording the corresponding change in potential or current. The protective effect combining a high corrosion potential and a low corrosion current. The Tafel curve is a current-potential plot that shows the anodic and cathodic reactions in the electrochemical cell (figure 1).

In this method, the potential of the working electrode (metal sample) was varied over a range at a specific rate and the resulting current response was recorded. The simultaneous anodic and cathodic reactions produced a total current which was represented by a curved line. The linear parts of the logarithmic Tafel plot were extrapolated to produce an intersection which generates a point that approximates the corrosion current (icorr) and corrosion potential (Ecorr). The corrosion current icorr facilitated the calculation of the corrosion rate based on equation (1) and the corrosion inhibition efficiency (IE%) or molecule coverage rate based on equation (2).

$$\text{Corrosion rate} = \frac{i_{corr} \times K \times EW}{\rho \times A} \quad (1)$$

$$IE(\%) = \frac{i_{corr} - i_{corr(inh)}}{i_{corr}} \times 100 \quad (2)$$

where K is a constant representing the units of the corrosion rate, EW is the equivalent weight in grams/valance of the metal, ρ is the density in g/cm3, A is the surface area in cm2 exposed to a corrosive solution, icorr and icorr(inh) are the corrosion currents in amperes without and with the inhibitor respectively.

Corrosion potential and current measurements were performed using a BioLogic VMP potentiostat, a saturated Ag/AgCl KCl reference electrode and a graphite counter electrode (figure 2) in the frequency range of 1 kHz to 0.05 Hz and with a signal amplitude of 100 mV. Each test was repeated three times to assess reproducibility; in general, minor differences (in the order of 10% of the corrosion potential) between repeated tests were found. The working area of the metal samples (Aluminium 6061 and XC48 steel) was 0.64 $cm^2$. The metal samples were wet abraded with 2400 grit SiC papers, rinsed with water and then cleaned with acetone under ultrasound. Measurements were carried out after a stabilisation period of 45 minutes. The tap water/compound mixture was buffered to pH = 9 with potash (KOH).

The compounds tested were as follows:

- A rhamnolipid;
- A sophorolipid;
- Rewocoros AL 200 (Modified ethoxylated phosphoric acid ester, which is a common corrosion inhibitor for steel and aluminium);
- Becrosan 2184 (Polycarboxylic acid triethanolamine, which is a common corrosion inhibitor for steel);
- Moderately hard water with 130 ppm CaCO3.

Table 1 below summarises the different tests carried out. A control test with no test compound (test 1) was also carried out.

Table 1

| | |
|---|---|
| Test 1 (control) | - |
| Test 2 (comparative) | Rhamnolipid |
| Test 3 (comparative) | Sophorolipid |
| Test 4 (comparative) | Rewocoros AL 200 |
| Test 5 (comparative) | Becrosan 2184 |

The results in terms of corrosion inhibition efficiency of tests 1 to 5 on XC48 steel and 6061 aluminium are presented in figures 3A and 3B, respectively.

For test 1, no corrosion inhibition.

For tests 2 to 5, figures 3A and 3B show that the corrosion inhibiting power of the compounds of the invention was high and comparable or even higher than that of the usual corrosion inhibitors on the respective metals. The decrease in inhibiting properties with increasing concentration was most likely due to increased competition between individual molecules. As the medium does not contain a neutral (such as Na2SO4, CaCO3) or corrosive (NaCl) supporting electrolyte, it favoured the action of any molecule with an adsorption mechanism present on the polarised surface and thus competition.

**EXAMPLE 2: PREPARATION OF A COMPOSITION OF THE INVENTION**

A typical processing fluid (also known as metalworking fluid) of the invention in the form of concentrate may, e.g., be composed without corrosion inhibitor as follows (Table 2):

Table 2

| Component | Function | % by weight |
|---|---|---|
| Hydrotreated naphthenic oil (e.g. Nynas BT 22) | Mineral oil | 58 |
| Polymerized ricinoleic acid ester | Lubricant | 5.4 |

(continued)

| Component | Function | % by weight |
|---|---|---|
| Hydrocarbyl succinimide | Emulsifier | 5.4 |
| Mono-n-butyl diethanolamine | Alkalinity agent | Amount sufficient to stabilize at pH = 9 |
| Block copolymer of propylene and ethylene oxides dioleate | Non-ionic surfactant | 2.1 |
| Ethoxylated glyceryl oleate | Non-ionic surfactant | 2.1 |
| Polyoxyethylene sorbitan monolaurate | Non-ionic surfactant | 2.8 |
| Triethanolamine | Alkalinity agent | 13 |
| Tolyltriazole derivative | Yellow metal deactivator | 0.6 |
| Demineralised water | Thinner | Balance |

**EXAMPLE 3: ELECTROCHEMICAL DETERMINATION OF THE ABILITY OF COMPOUNDS / A COMPOSITION OF THE INVENTION AND OF COMPARATIVE COMPOUNDS TO INHIBIT CORROSION IN AN AQUEOUS METAL WORKING FLUID**

The products tested were as follows:

- A rhamnolipid in a concentrate;
- A sophorolipid in a concentrate;
- Mixtures of rhamnolipid and sophorolipid in a concentrate;
- A mixture of Rewocoros AL 200 (modified ethoxylated phosphoric acid ester, which is a common corrosion inhibitor for steel and aluminium) and Becrosan 2184 (polycarboxylic acid triethanolamine, which is a common corrosion inhibitor for steel);
- A processing fluid concentrate without corrosion inhibitor;
- Moderately hard water with 130 ppm CaCO3.

The products tested with and without corrosion inhibitor(s) were evaluated in dilutions of 3%, 5% and 10% by weight in moderately hard water at 130 ppm CaCO3.

The amounts of non-ionic surfactants by weight were adjusted for each example to respect the hydrophilic/lipophilic balance ensuring the stability of the concentrate and the respective dilutions. The total amount of non-ionic surfactants in the concentrate may be between 5 and 11% by weight.

As the Becrosan 2184 product provided contains 50% by weight of triethanolamine, the amount of pH buffer in the composition(s) comprising it was reduced by the same amount in the concentrate in order to respect the same alkalinity reserve for all examples.

Table 3 below summarises the various tests carried out.

Table 3

| | |
|---|---|
| Test 6 (control) | Concentrate without corrosion inhibitor |
| Test 7 (comparative) | Sophorolipid |
| Test 8 (comparative) | Rhamnolipid |
| Test 9 (according to the invention) | Rhamnolipid / Sophorolipid (1:1) |
| Test 10 (according to the invention) | Rhamnolipid / Sophorolipid (1.5:1) |
| Test 11 (comparative) | Rewocoros AL 200 / Becrosan 2184 (1.5:1) |

It is common knowledge that the effectiveness of an aqueous metalworking fluid is determined at the highest dilutions.

The results in % corrosion inhibition efficiency of tests 6 to 11 on XC48 steel and 6061 aluminium are shown

in figures 4A and 4B, respectively.

For test 6, the corrosion inhibition power of the diluted concentrate without corrosion inhibitor was considered relatively low. But compared to water, the corrosion inhibition efficiency was between 69 and 92% for an increasing dilution by weight of the concentrate.

For tests 7 to 8, figure 4A and 4B show that the corrosion inhibiting power of the compounds of the invention taken independently was higher than that of test 6. Figure 4B also shows that the corrosion inhibitory power to inhibit the aluminium staining mechanism at the same level as that of Test 11 was stronger when the sophorolipid was chosen alone (Test 7).

Concerning tests 9 to 10, figure 4A shows that the corrosion inhibiting power, to inhibit the corrosion mechanism of steel at the same level as that of test 11, was stronger when a mixture of rhamnolipid and sophorolipid was chosen (test 10). Figure 4A also shows that the corrosion inhibiting power of a mixture of rhamnolipid and sophorolipid to inhibit the corrosion mechanism of steel was higher when the proportion of rhamnolipid increased. On the other hand, figure 4B shows that the corrosion inhibiting power of a mixture of rhamnolipid and sophorolipid, to inhibit the corrosion mechanism of aluminium, was all the higher when the proportion of sophorolipid increased.

All the results attest to the strong inhibiting power of the compounds of the invention, alone or in a mixture, which can easily replace conventional corrosion inhibitors.

**EXAMPLE 4: DETERMINATION OF THE ABILITY OF COMPOUNDS / A COMPOSITION OF THE INVENTION AND OF COMPARATIVE COMPOUNDS TO INHIBIT CORROSION OF CAST IRON IN AN AQUEOUS METALWORKING FLUID**

Corrosion was tested according to IP125-2014 at 3 and 5 wt% concentrate in hard water (200 ppm $CaCO_3$).

The results were scored (0/0) with the first number corresponding to the number of points and the second to the proportion of the surface corroded (Table 4 below). The lowest score was the best.

Table 4

| Rating | Proportion of surface area corroded |
|---|---|
| 0 | none |
| 1 | less than 10% |
| 2 | between 10 to 25% |
| 3 | between 25 and 50% |
| 4 | between 50 and 75% |
| 5 | greater than 75% |

The products tested were as follows:

- A rhamnolipid in a concentrate;
- A sophorolipid in a concentrate;
- A mixture of rhamnolipid and sophorolipid in a concentrate;
- A mixture of Rewocoros AL 200 (modified ethoxylated phosphoric acid ester, which is a common corrosion inhibitor for steel and aluminium) and Becrosan 2184 (polycarboxylic acid triethanolamine, which is a common corrosion inhibitor for steel);
- Becrosan 2184 (polycarboxylic acid triethanolamine, which is a common corrosion inhibitor for steel);
- A processing fluid concentrate without corrosion inhibitor.

The pH was adjusted to 9.2 after dilution for all the products tested compared to a commercial concentrate containing a dicyclohexylamine, a corrosion inhibitor such as a mixture of C7-C25 carboxylic acid(s) or di-carboxylic acid(s) and a benziothiazolinone biocide, marketed by the company Quacker under the reference Quackercool 13800 BFF.

Table 5 below summarises the various tests carried out.

Table 5

| | |
|---|---|
| Test 12 (control) | Concentrate without corrosion inhibitor |

(continued)

| | |
|---|---|
| Test 13 (comparative) | Sophorolipid |
| Test 14 (comparative) | Rhamnolipid |
| Test 15 (according to the invention) | Rhamnolipid / sophorolipid (2.3:1) |
| Test 16 (comparative) | Rewocoros AL200 / Becrosan 2184 (2 : 1) |
| Test 17 (comparative) | Becrosan 2184 |
| Test 18 (comparative) | Commercial concentrate |

The results are presented in Table 6.

Table 6

| Dilution | 3% | 5% |
|---|---|---|
| Test 12 (control) | 13/1 | 11/0 |
| Test 13 (comparative) | 10/1 | 0/0 |
| Test 14 (comparative) | 3/0 | 0/0 |
| Test 15 (according to the invention) | 1/0 | 0/0 |
| Test 16 (comparative) | 10/0 | 5/0 |
| Test 17 (comparative) | 3/0 | 0/0 |
| Test 18 (comparative) | 4/0 | 1/0 |

As a result, the samples in this example showed corrosion inhibition at the level of conventional corrosion inhibitors and commercial fluids.

**EXAMPLE 5: DETERMINATION OF THE ABILITY OF COMPOUNDS / A COMPOSITION OF THE INVENTION AND OF COMPARATIVE COMPOUNDS TO INHIBIT STAINING OF ALUMINUM IN AN AQUEOUS METALWORKING FLUID**

Corrosion was tested at 5% by weight of concentrate with or without corrosion inhibitor(s). The 6061 aluminium samples were mechanically polished with 600 grit abrasive paper, stored in acetone and then immersed in the product diluted in moderately hard water (130 ppm $CaCO_3$) for 24 hours at 40°C.

The products tested were the following:

- A rhamnolipid in a concentrate;
- A sophorolipid in a concentrate;
- A mixture of rhamnolipid and sophorolipid in a concentrate;
- A mixture of Rewocoros AL 200 (modified ethoxylated phosphoric acid ester, which is a common corrosion inhibitor for steel and aluminium) and Becrosan 2184 (polycarboxylic acid triethanolamine, which is a common corrosion inhibitor for steel);
- Becrosan 2184 (polycarboxylic acid triethanolamine, which is a common corrosion inhibitor for steel);
- A processing fluid concentrate without corrosion inhibitor.

The pH was adjusted to 9.2 after dilution for all the products tested compared to a commercial concentrate containing a dicyclohexylamine, a corrosion inhibitor such as a mixture of C7-C25 carboxylic acid(s) or di-carboxylic acid(s) and a benziothiazolinone biocide, marketed by the company Quacker under the reference Quackercool 13800 BFF.

Table 7 below summarises the various tests carried out.

Table 7

| | |
|---|---|
| Test 19 (control) | Concentrate without corrosion inhibitor |

(continued)

| | |
|---|---|
| Test 20 (comparative) | Sophorolipid (3000 ppm) |
| Test 21 (comparative) | Rhamnolipid (3000 ppm) |
| Test 22 (according to the invention) | Rhamnolipid / sophorolipid (1:1) |
| Test 23 (comparative) | Rewocoros AL200 / Becrosan 2184 (2:1) |
| Test 24 (comparative) | Commercial concentrate (pH=9.7) |

The results of tests 19 to 24 are shown in figures 5A to 5F, respectively.

With regard to tests 19 to 22, figures 5A to 5D show that the degree of staining of the aluminium samples of tests 20 to 22 was less than that of test 19, which attested to the strong corrosion inhibiting power of sophorolipid and rhamnolipid, alone or in a mixture.

In addition, by judging the degree of staining of the test 20 sample shown in figure 5B, it can be seen that the inhibiting power of sophorolipid was greater than or equal to that of conventional corrosion inhibitors (figures 5E and 5F). In conclusion, it was pleasantly surprising that the water-miscible or aqueous-based metalworking compositions of the present invention exhibited excellent corrosion protection for very different metallic materials.

**List of references**

1. Patent Application US20180291306
2. Patent Application US20170009175
3. Leimenstoll et al., "Are performance additives necessary for aluminum machining ?", 17th International Colloquium Tribology, 2010
4. Patent Application US2014014453
5. Patent Application US20150299556
6. Patent Application US20160237334
7. Plaza et al., "Biosurfactants: Eco-Fiendly and Innovative Biocides against Biocorrosion", Int. J. Mol. Sci., 21: 2152, 2020
8. International Application WO2018095975
9. by Gorin et al., Canadian Journal of Chemistry, 39: 846, 1961
10. Shete et al., Journal of Scientific and Industrial Research, 65: 91, 2006
11. International Application WO2012167920
12. International Application WO2015091250
13. Ivan M. Zin et al., 2018


**Claims**

1. An aqueous alkaline composition having a pH from 8 to 12 comprising at least one sophorolipid, at least one rhamnolipid, at least one non-water soluble lubricant, and at least one alkalinity agent;

   wherein said at least one alkalinity agent is chosen from the group consisting of hydroxides of alkali metals and of alkaline earth metals, alkanolamines, and aliphatic amines; and
   wherein said composition contains:

   - from 0.01 to 30 wt% of sophorolipids;
   - from 0.01 to 30 wt% of rhamnolipids;
   - from 1 to 80 wt% of non-water soluble lubricants;
   - from 1 to 25 wt% of alkalinity agents.

2. Composition according to claim 1, wherein the at least one rhamnolipid is chosen amongst the rhamnolipids of formula (I):

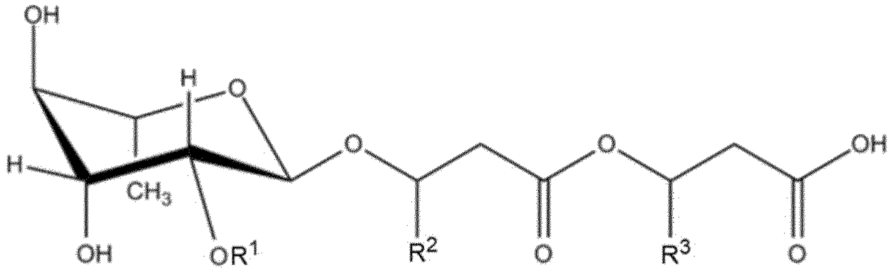

(I)

wherein

R¹ represents -H or a L-rhamnose moiety;
$R^2$ and $R^3$, independently represents a linear or branched, alkyl chain having from 5 to 9 carbon atoms.

3. Composition according to claim 2, wherein the at least one rhamnolipid is of formula (I) in which $R^2$ and $R^3$ are heptyl groups.

4. Composition according to claim 3, wherein the at least one rhamnolipid is the monorhamnolipid of formula (II), the dirhamnolipid of formula (III) or a mixture thereof:

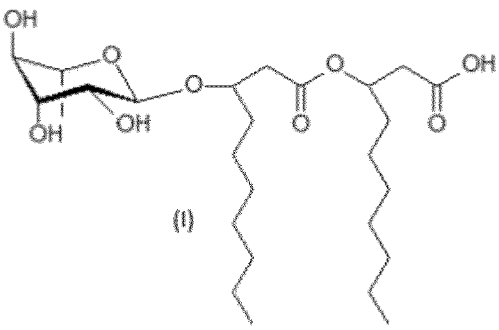

(I)

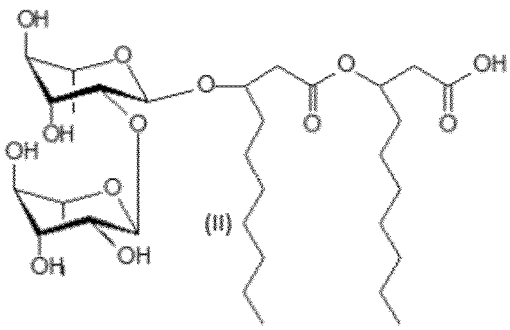

(II)

(II) (III)

5. Composition according to claim 1, wherein the at least one sophorolipid is the sophorolipid of formula (IV), the sophorolipid of formula (V) or a mixture thereof:

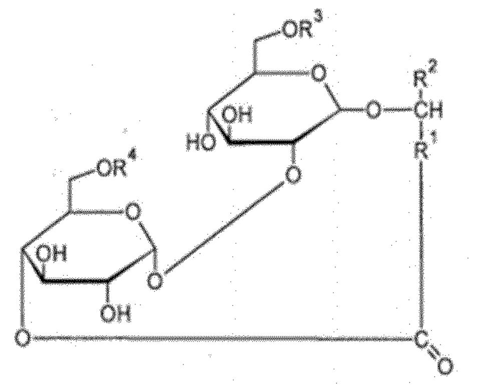

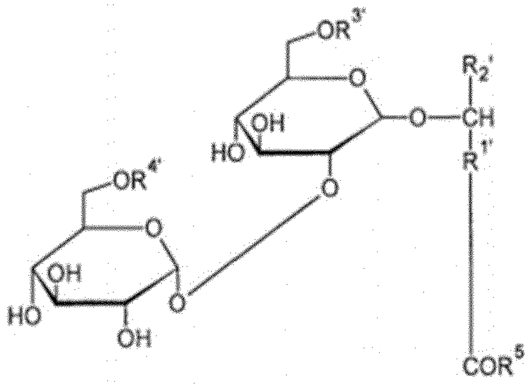

(IV) (V)

wherein

$R^1$ and $R^{1'}$, independently represent a hydroxylated or non-hydroxylated, linear or branched, alkyl chain having from 1 to 21 carbon atoms;
$R^2$ and $R^{2'}$, independently represent H or a hydroxylated or non-hydroxylated, linear or branched, alkyl chain having from 1 to 9 carbon atoms;
$R^3$, $R^4$, $R^{3'}$ and $R^{4'}$, independently represent H or a acetyl group; and
$R^5$ is an $-OCH_3$ or -OH group.

**6.** Composition according to claim 5, wherein the at least one sophorolipid has the formula (IV) wherein $R^1$ and $R^{1'}$, independently represent a hydroxylated or non-hydroxylated, linear or branched, alkyl chain having from 16 to 18 carbon atoms;

**7.** Composition according to claim 5 or 6, wherein the weight ratio of formula (IV) to formula (V) is between 80/20 and 30/70.

**8.** Composition according to any one of claims 1 to 7, wherein the at least one non-water soluble lubricant is a natural, renewable or synthetic oil of vegetable, mineral or animal origin or a combination thereof.

**9.** Metalworking fluid comprising a composition as defined in any one of claims 1 to 8.

**10.** Use of a composition according to any one of claims 1 to 8, as a corrosion inhibitor, in an alkaline medium.

**11.** Use of a composition according to any one of claims 1 to 8, for lubricating metals.

## Patentansprüche

**1.** Wässrige alkalische Zusammensetzung mit einem pH-Wert von 8 bis 12, umfassend mindestens ein Sophorolipid, mindestens ein Rhamnolipid, mindestens ein nicht wasserlösliches Schmiermittel und mindestens ein Alkalinitätsmittel;

wobei das mindestens eine Alkalinitätsmittel aus der Gruppe ausgewählt ist, die aus Hydroxiden von Alkalimetallen und Erdalkalimetallen, Alkanolaminen und aliphatischen Aminen besteht; und
wobei die Zusammensetzung enthält:

- zu 0,01 bis 30 Gew.-% Sophorolipide;
- zu 0,01 bis 30 Gew.-% Rhamnolipide;
- zu 1 bis 80 Gew.-% nicht wasserlösliche Schmiermittel;
- zu 1 bis 25 Gew.-% Alkalinitätsmittel.

**2.** Zusammensetzung nach Anspruch 1, wobei das mindestens eine Rhamnolipid aus den Rhamnolipiden der Formel (I) ausgewählt ist:

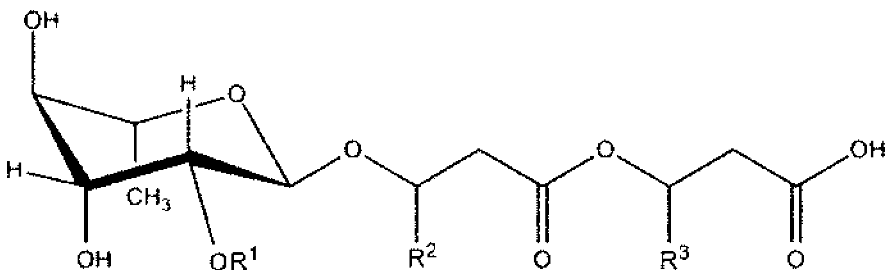

(I)

wobei

$R^1$ für -H oder eine L-Rhamnoseeinheit steht;
$R^2$ und $R^3$ unabhängig voneinander für eine lineare oder verzweigte Alkylkette mit 5 bis 9 Kohlenstoffatomen stehen.

3. Zusammensetzung nach Anspruch 2, wobei das mindestens eine Rhamnolipid die Formel (I) aufweist, in der $R^2$ und $R^3$ Heptylgruppen sind.

4. Zusammensetzung nach Anspruch 3, wobei das mindestens eine Rhamnolipid das Monorhamnolipid der Formel (II), das Dirhamnolipid der Formel (III) oder eine Mischung davon ist:

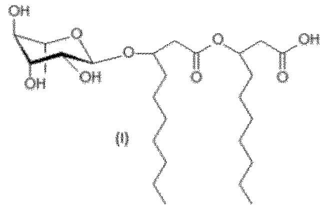
(I)
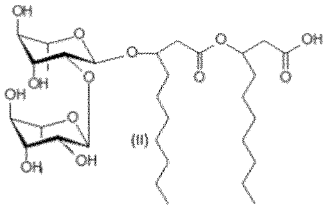
(II)

(II) (III)

5. Zusammensetzung nach Anspruch 1, wobei das mindestens eine Sophorolipid das Sophorolipid der Formel (IV), das Sophorolipid der Formel (V) oder eine Mischung davon ist:

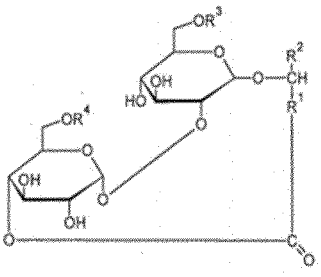
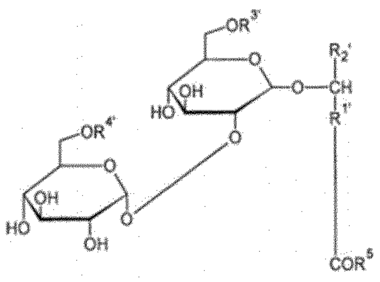

(IV) (V)

wobei

$R^1$ und $R^{1'}$ unabhängig voneinander für eine hydroxylierte oder nicht-hydroxylierte, lineare oder verzweigte Alkylkette mit 1 bis 21 Kohlenstoffatomen stehen;
$R^2$ und $R^{2'}$ unabhängig voneinander für H oder eine hydroxylierte oder nicht-hydroxylierte, lineare oder verzweigte Alkylkette mit 1 bis 9 Kohlenstoffatomen stehen;
$R^3$, $R^4$, $R^{3'}$ und $R^{4'}$ unabhängig voneinander für H oder eine Acetylgruppe stehen; und
$R^5$ ein $-OCH_3$ oder -OH-Gruppe ist.

6. Zusammensetzung nach Anspruch 5, wobei das mindestens eine Sophorolipid die Formel (IV) aufweist, wobei $R^1$ und $R^{1'}$ unabhängig voneinander für eine hydroxylierte oder nicht-hydroxylierte, lineare oder verzweigte Alkylkette mit 16 bis 18 Kohlenstoffatomen stehen;

7. Zusammensetzung nach Anspruch 5 oder 6, wobei das Gewichtsverhältnis von Formel (IV) zu Formel (V) zwischen 80/20 und 30/70 liegt.

8. Zusammensetzung nach einem der Ansprüche 1 bis 7, wobei das mindestens eine nicht wasserlösliche Schmiermittel ein natürliches, erneuerbares oder synthetisches Öl pflanzlichen, mineralischen oder tierischen Ursprungs oder eine Kombination davon ist.

9. Metallbearbeitungsfluid, umfassend eine Zusammensetzung wie in einem der Ansprüche 1 bis 8 definiert.

10. Verwendung einer Zusammensetzung nach einem der Ansprüche 1 bis 8 als Korrosionsinhibitor in einem alkalischen Medium.

11. Verwendung einer Zusammensetzung nach einem der Ansprüche 1 bis 8 zum Schmieren von Metallen.

## Revendications

1. Composition alcaline aqueuse ayant un pH de 8 à 12 comprenant au moins un sophorolipide, au moins un rhamnolipide, au moins un lubrifiant non soluble dans l'eau, et au moins un agent d'alcalinité ;

   où ledit au moins un agent d'alcalinité est choisi dans le groupe constitué d'hydroxydes de métaux alcalins et de métaux alcalino-terreux, d'alcanolamines, et d'amines aliphatiques ; et
   où ladite composition comprend:

   - de 0,01 à 30 % en poids de sophorolipides;
   - de 0,01 à 30 % en poids de rhamnolipides;
   - de 1 à 80 % en poids de lubrifiants non solubles dans l'eau;
   - de 1 à 25 % en poids d'agents d'alcalinité.

2. Composition selon la revendication 1, où ledit au moins un rhamnolipide est choisi parmi les rhamnolipides de formule (I) :

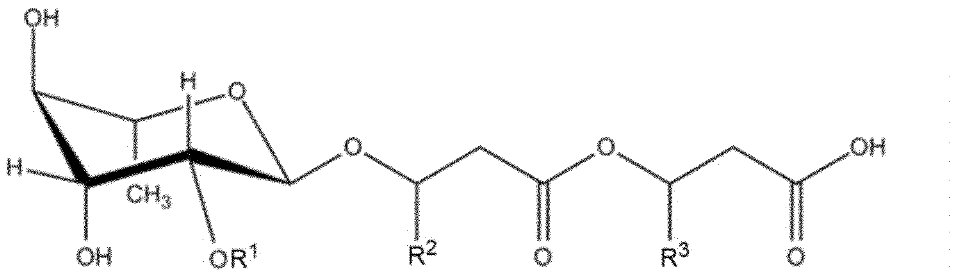

(I)

où

$R^1$ représente -H ou un groupe L-rhamnose;
$R^2$ and $R^3$, représente indépendamment, une chaine alkyle linéaire ou ramifiée ayant de 5 to 9 atomes de carbone.

3. Composition selon la revendication 2, où ledit au moins un rhamnolipide est de formule (I) dans laquelle $R^2$ et $R^3$ sont des groupes heptyle.

4. Composition selon la revendication 3, où ledit au moins un rhamnolipide est le monorhamnolipide de formule (II), le dirhamnolipide de formula (III) ou un mélange de ceux-ci:

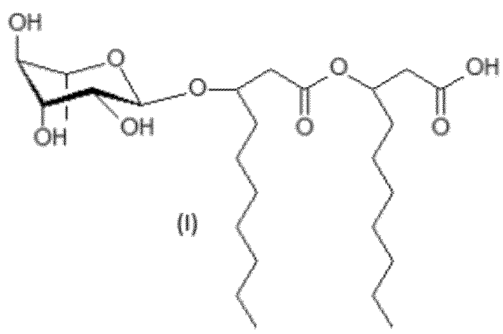

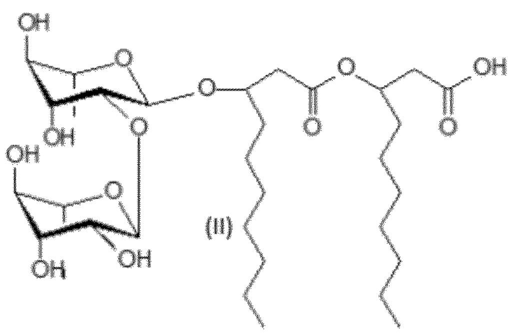

(II) (III)

5. Composition selon la revendication 1, où ledit au moins un sophorolipide est le sophorolipide de formule (IV), le sophorolipide de formule (V) ou un mélange de ceux-ci:

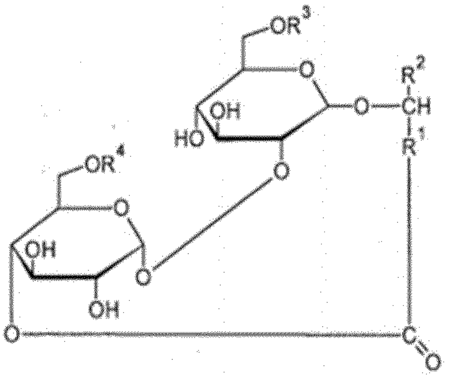

(IV)

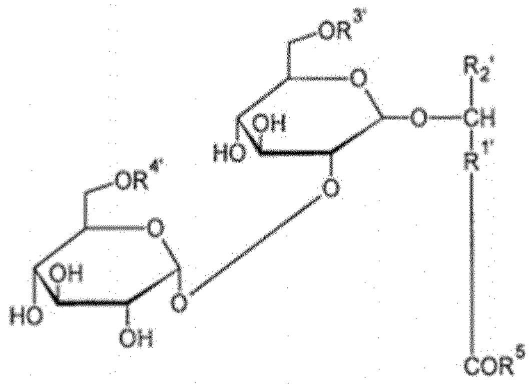

(V)

où

$R^1$ et $R^{1'}$, représentent indépendamment une chaîne alkyle hydroxylée ou non-hydroxylée, linéaire ou ramifiée, ayant de 1 à 21 atomes de carbone ;
$R^2$ et $R^{2'}$, représentent indépendamment H ou une chaîne alkyle hydroxylée ou non-hydroxylée, linéaire ou ramifiée, ayant de 1 to 9 atomes de carbone ;
$R^3$, $R^4$, $R^{3'}$ et $R^{4'}$, représentent indépendamment H ou un groupe acétyle; et
$R^5$ est un groupe $-OCH_3$ ou -OH.

**6.** Composition selon la revendication 5, où ledit au moins un sophorolipide a la formule (IV) où $R^1$ et $R^{1'}$, représentent indépendamment une chaîne alkyle hydroxylée ou non-hydroxylée, linéaire ou ramifiée, ayant de 16 à 18 atomes de carbone.

**7.** Composition selon la revendication 5 ou 6, où le rapport en poids entre la formule (IV) et la formule (V) est compris entre 80/20 et 30/70.

**8.** Composition selon l'une quelconque des revendications 1 à 7, où ledit au moins un lubrifiant non soluble dans l'eau est une huile naturelle, renouvelable ou synthétique d'origine végétale, minérale ou animale ou une combinaison de celles-ci.

**9.** Fluide pour le travail des métaux comprenant une composition telle que définie dans l'une quelconque des revendications 1 à 8.

**10.** Utilisation d'une composition selon l'une quelconque des revendications 1 à 8, comme inhibiteur de corrosion, en milieu alcalin.

**11.** Utilisation d'une composition selon l'une quelconque des revendications 1 à 8, pour la lubrification des métaux.

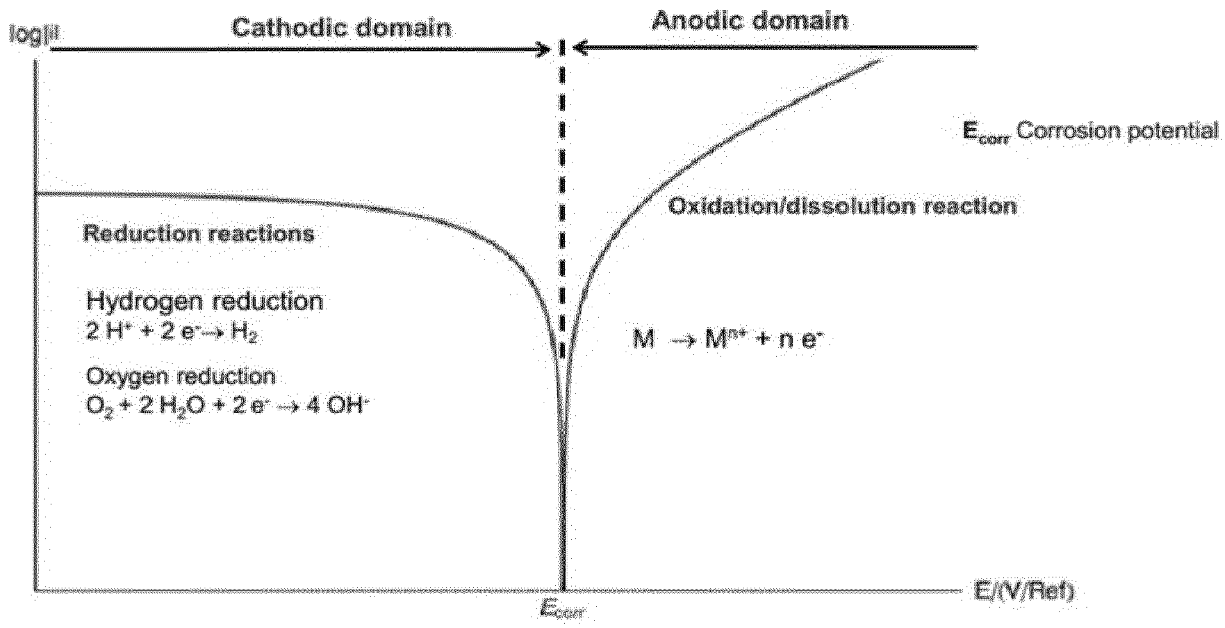


FIGURE 1

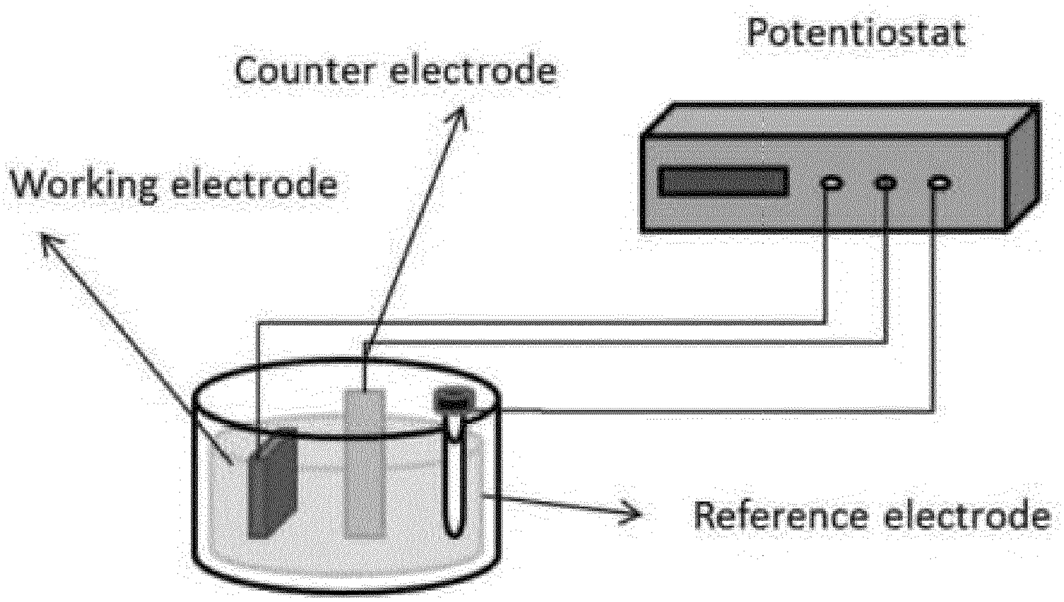


FIGURE 2

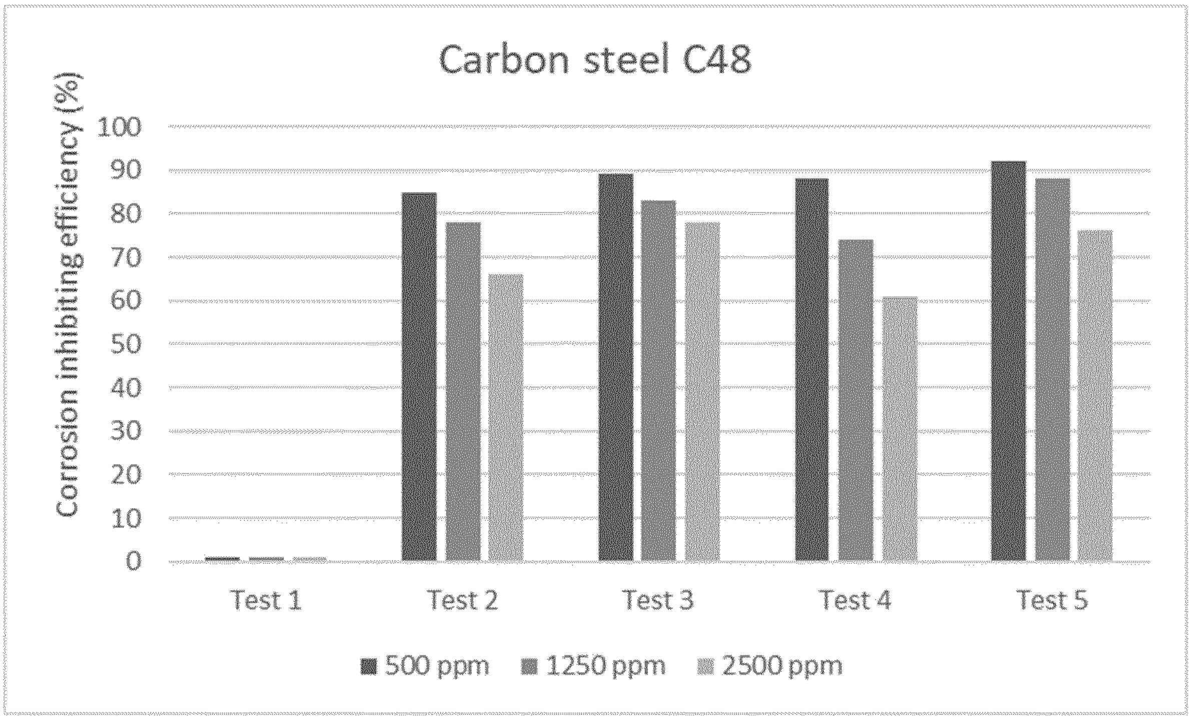


FIGURE 3A

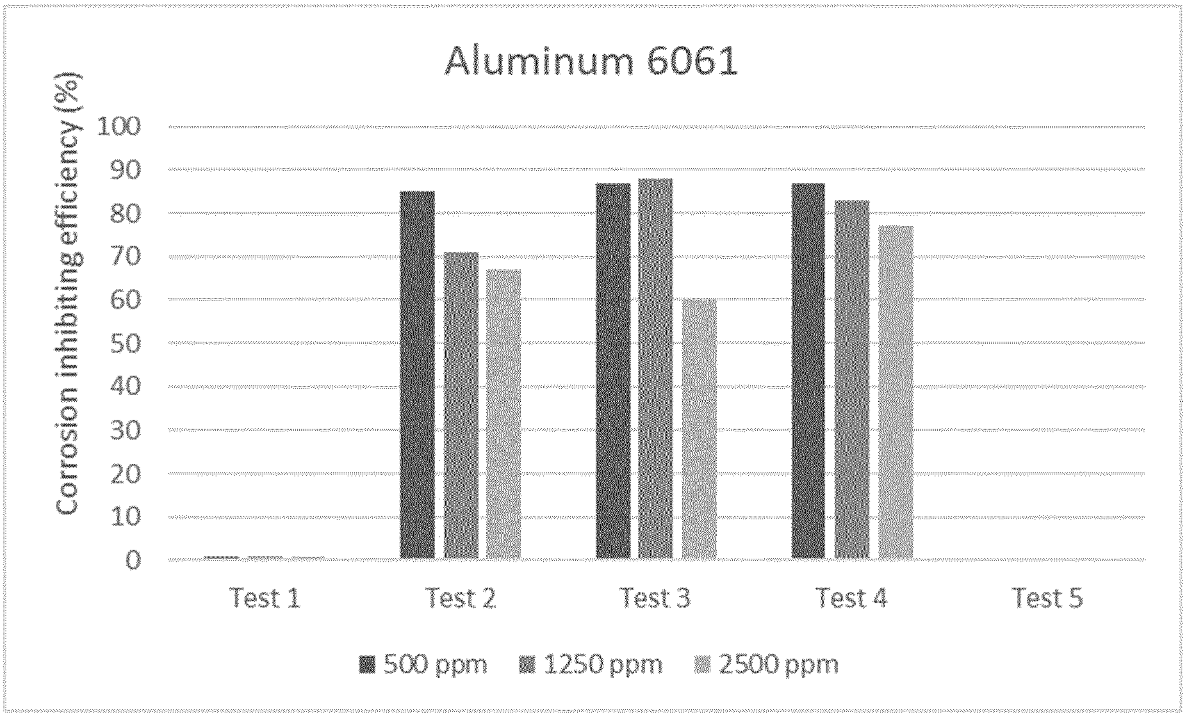


FIGURE 3B

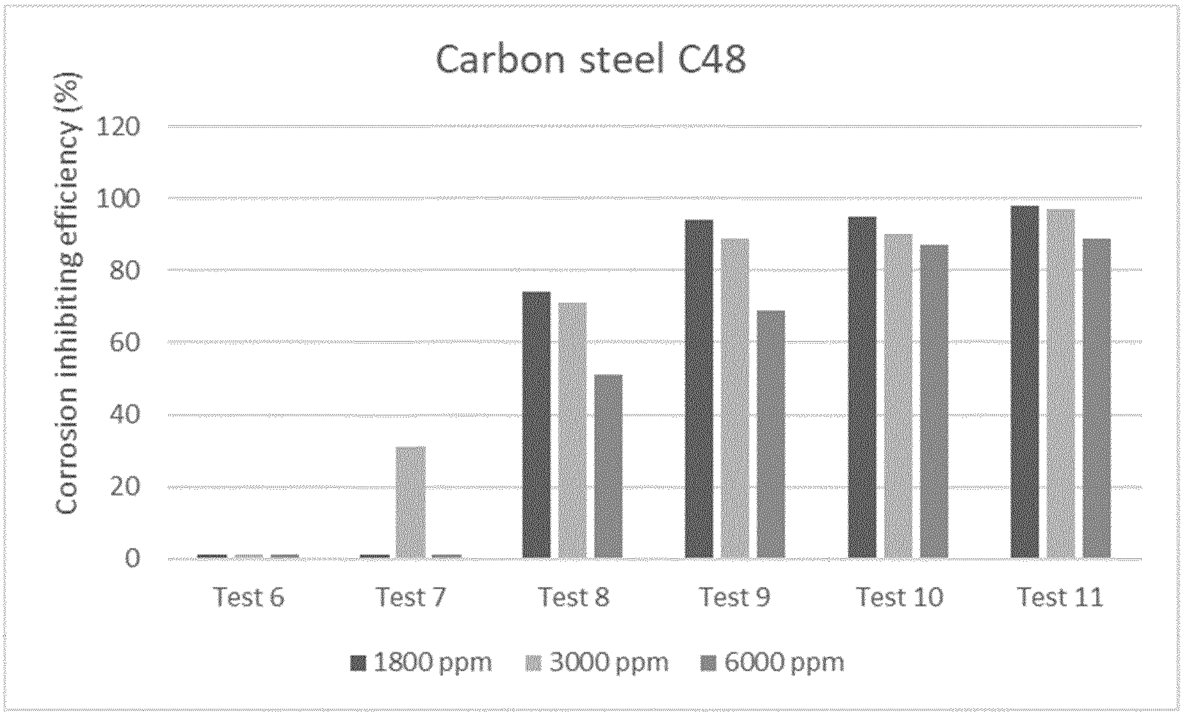


FIGURE 4A

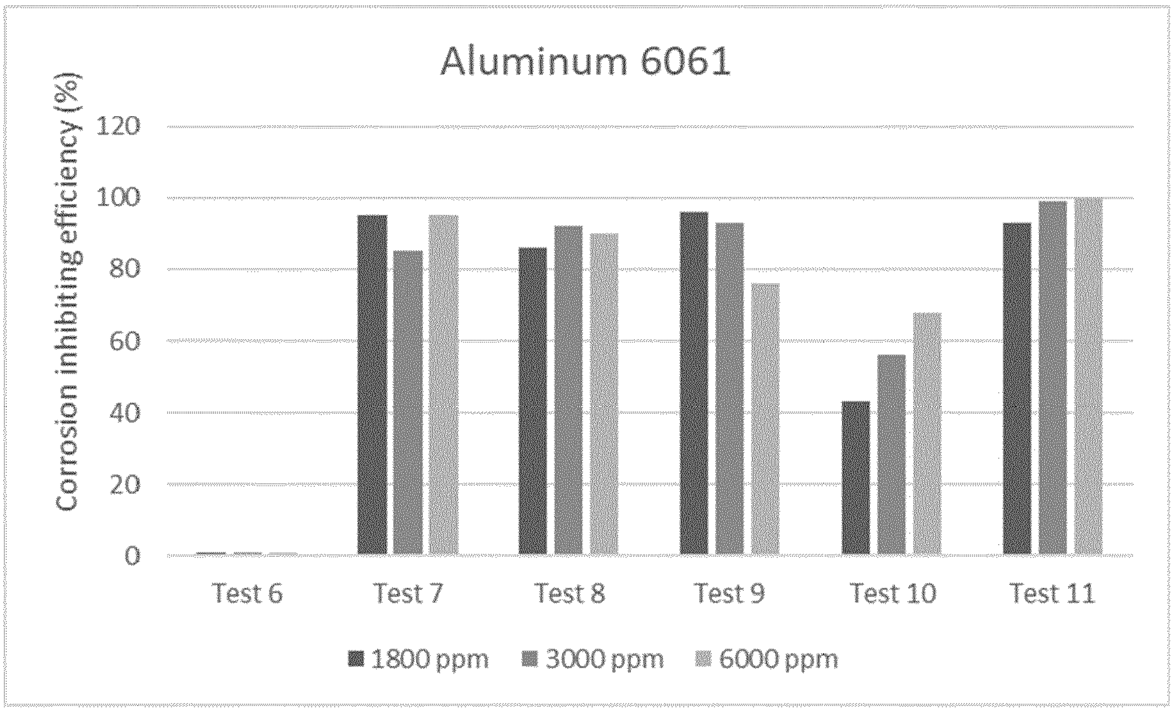


FIGURE 4B

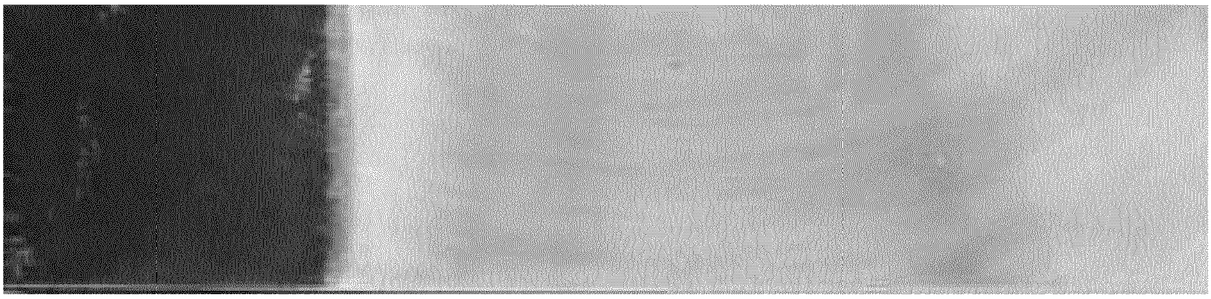

FIGURE 5A

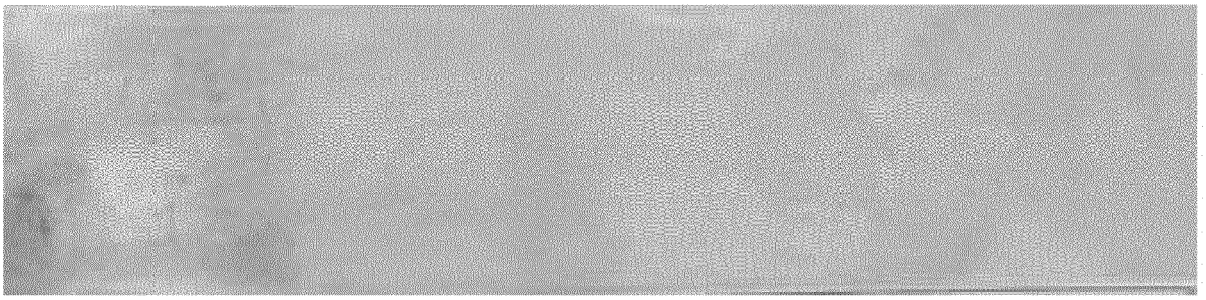

FIGURE 5B

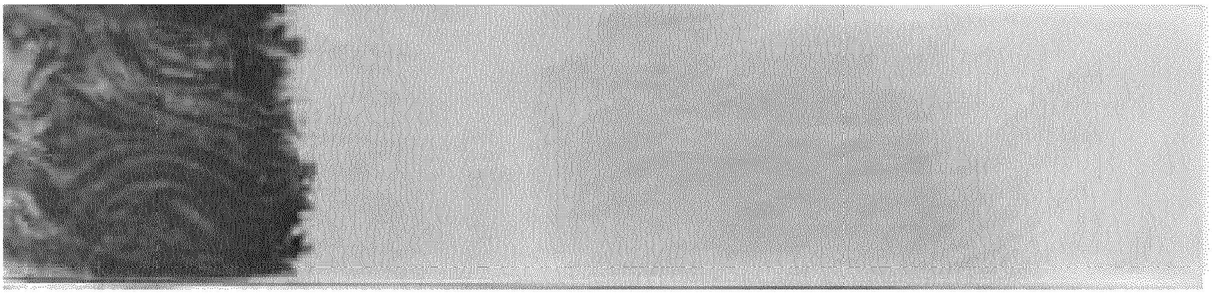

FIGURE 5C

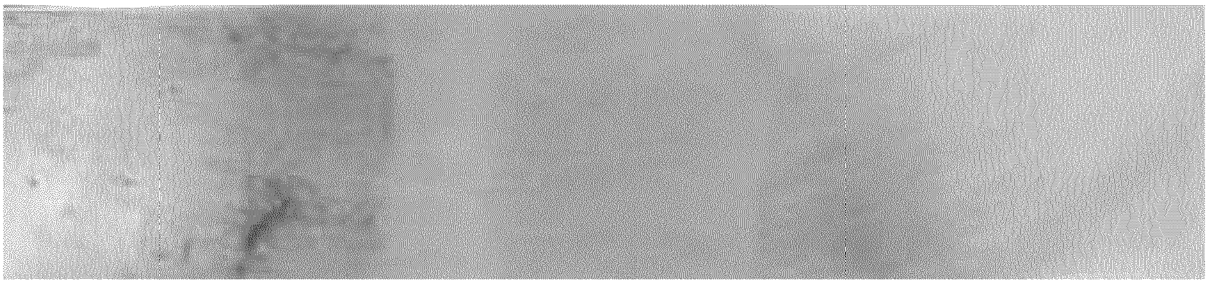

FIGURE 5D

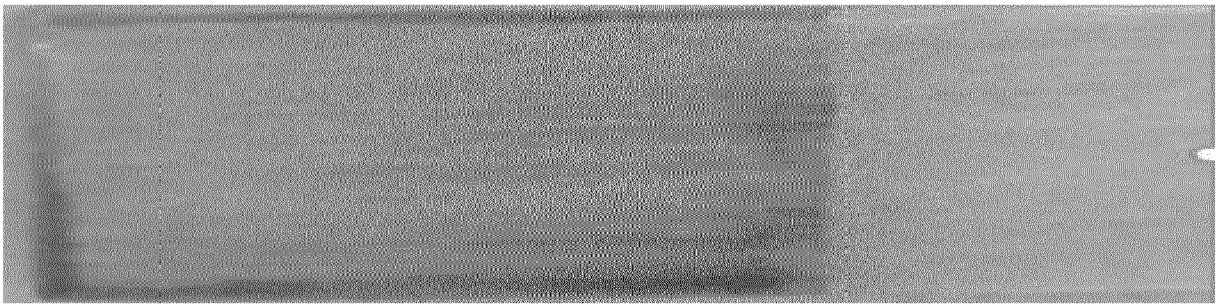

FIGURE 5E

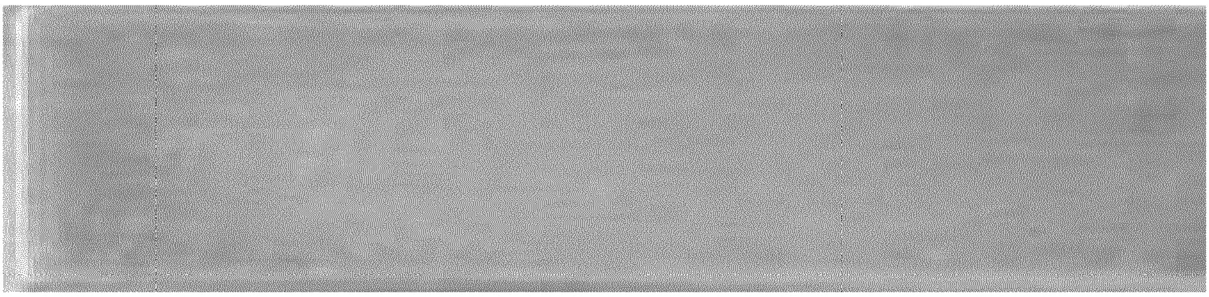

FIGURE 5F

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20180291306 A
- US 20170009175 A
- US 2014014453 A
- US 20150299556 A
- US 20160237334 A
- WO 2018095975 A
- WO 2012167920 A
- WO 2015091250 A


### Non-patent literature cited in the description


- **LEIMENSTOLL et al.** Are performance additives necessary for aluminum machining?. *17th International Colloquium Tribology,* 2010
- **PLAZA et al.** Biosurfactants: Eco-Fiendly and Innovative Biocides against Biocorrosion. *Int. J. Mol. Sci.,* 2020, vol. 21, 2152
- **GORIN et al.** *Canadian Journal of Chemistry,* 1961, vol. 39, 846
- **SHETE et al.** *Journal of Scientific and Industrial Research,* 2006, vol. 65, 91
- **LEIMENSTOLL et al.** Are performance additives necessary for aluminum machining ?. *17th International Colloquium Tribology,* 2010